# EUROPEAN PATENT APPLICATION

(11) **EP 2 221 153 A1**
(43) Date of publication of application: **25.08.2010**
(21) Application number: 08840817.4
(22) Date of filing: 16.10.2008
(51) Int. Cl.: B25J 17/02

(54) **PARALLEL ROBOT WITH FOUR DEGREES OF FREE MOVEMENT**

(30) Priority: 24.10.2007 ES 200702793
(71) Applicant: UNIVERSIDAD DEL PAIS VASCO-EUSKAL HERRIKO UNIBERSITATEA, 48940 Leioa (Vizcaya) (ES)
(72) Inventor: SALGADO PICÓN, Oscar, E-48940 Leioa (Vizcaya) (ES); ALTUZARRA MAESTRE, Oscar, E-48940 Leioa (Vizcaya) (ES); HERNÁNDEZ FRÍAS, Alfonso, E-48940 Leioa (Vizcaya) (ES); PINTO CÁMARA, Charles, E-48940 Leioa (Vizcaya) (ES); PETUYA ARCOCHA, Víctor, E-48940 Leioa (Vizcaya) (ES)
(74) Representative: Carpintero Lopez, Francisco
(86) International application number: PCT/ES2008/000647
(87) International publication number: WO 2009/053506

(57) **Abstract**

The invention relates to a parallel robot with four degrees of freedom comprising four articulated kinematic chains (1), each of said articulated kinematic chains (1) being joined at a first end to a mobile platform (3) configured to carry tool (4) and at a second end to a fixed member (5). Said mobile platform (3) is formed by a rigid, i.e., not flexible, member or a member formed by joining together a series of elements such that said joining is rigid and does not allow relative movement between the different elements, therefore forming a single member from a mechanical point of view.

## Description

### Object of the Invention

The object of the robot of the invention is to move a platform carrying a tool for handling objects or for performing pick and place actions, with four degrees of freedom (three translational movements and one rotational movement about a vertical direction), with very high accelerations and speeds in any direction.

### Background of the Invention

A parallel robot comprises a fixed support or base plate on which there are assembled actuators which act on articulated arms or kinematic chains which are joined to a mobile platform in which the corresponding tool is arranged.

Parallel robots with three degrees of freedom are described in patent publications US-A-4976582 and US 6729202, and a parallel robot with four degrees of freedom, specifically, three translational movements and one rotational movement, is described in European patent publication EP-A-1084802.

Parallel robots with four degrees of freedom, three translational movements and one rotational movement about a main direction, are very appropriate for performing part handling or assembly tasks, and they are simpler, faster and less expensive than more complex parallel robots, for example with 6 degrees of freedom. A priori, the definition of a parallel robot of four degrees of freedom from one that is less complex, such as a robot of three degrees of freedom, could be considered. For example, patent publication US 4,976,582 describes the possibility of obtaining a fourth degree of freedom by means of incorporating a fourth kinematic chain which directly operates the fourth degree of freedom (the rotation of the tool), but a solution of this type means that this robot does not have a parallel structure, so it is not within the field of application of the invention.

EP-A-1084802 describes a parallel robot in which the joints of the mobile platform are articulation-type joints, which allows reaching high speeds and accelerations. It specifically comprises four kinematic chains, joined on one side to the mobile platform and on the other, through rotary actuators, to the base plate. The mobile platform is formed by two bars which are joined at their ends to the four kinematic chains and an additional bar, assembled between the first two bars through articulated joints. The additional bar is the one carrying the tool. A ± 45º rotation of the tool can be achieved with this mobile platform. To achieve greater rotation, it is necessary to incorporate additional elements, for example, gear rings.

Furthermore, this design has a non-homogeneous performance. To compensate for this limitation, the proprietor of patent EP 1 084 802 developed a new configuration described in the publication: "I4: a new parallel mechanism for SCARA motions" Proc. of IEEE ICRA: Int. Conf. on Robotics and Automation, Taipei, Taiwan, September 14-19, 2003. In this new configuration, the mobile platform comprises prismatic joints instead of articulated joints and the gear rings are replaced with rack and pinion gears, thus reducing the risks of collision between the members of the mobile platform.

Publication WO-A-2006/087399 proposes a solution to the aforementioned problems by means of a mobile platform formed by four members joined together by articulated joints and four kinematic chains formed by four parallel bars at least two being parallel and joined by means of rotating ball joints.

Said solution has the drawbacks of having to assemble the mobile platform by joining the different members that form it, as well as the operation and manufacture of the rotating ball joints not corresponding with the theoretical values.

### Description of the Invention

The invention relates to a parallel robot capable of moving a platform in which it carries a tool with four degrees of freedom, three translational movements and one rotational movement about a vertical direction, comprising four articulated kinematic chains or articulated arms, the latter being able to be identical. Each of these kinematic chains is joined at a first end to a mobile platform, for example polygonal shaped, preferably square shaped. A tool can be arranged in said mobile platform. At a second end the articulated kinematic chains are joined to a fixed member.

According to the invention, said mobile platform is formed by a rigid member. Rigid member is understood as a single non-flexible member, or a member formed by joining together a series of elements such that said joining is rigid and does not allow relative movement between the different elements, therefore forming a single member from a mechanical point of view.

The embodiment is thus simpler as joining the different members of the mobile platform by means of ball joints or another type of joints is prevented. As mentioned, the platform of the present invention is rigid, i.e., formed by a single rigid member or by a plurality of them joined together without there being any degree of freedom in the joining. The kinematic modeling of the platform is therefore simplified as it does not have any degree of freedom. Finally, the wear or risk of breaking of the mobile platform is minimized by the absence of relative movement between the different members thereof.

Each articulated kinematic chain of the present invention can comprise two first parallel bars joined at their ends by means of respective first rotating joints to two second parallel bars. One of the first bars will be located in the proximity of the mobile platform and the other one in the proximity of the fixed member. The two second bars will join the two first bars in the direction of the fixed member to the mobile platform. Said joining of the first bars and the second bars forms an articulated parallelogram. The sides of said articulated parallelogram, i.e., the first bars and second bars, are all contained in one and the same plane. This configuration is maintained both in the standby position and in the movement of the kinematic chain. This is because the axes of rotation of the mentioned first rotating joints are all parallel and in turn perpendicular to the plane containing the first and second bars.

The two first bars can comprise in their middle area second rotating joints with their axes of rotation parallel to one another. A first one of the second rotating joints is configured to be joined to the mobile platform and a second one of the second rotating joints is configured to be joined to the fixed member.

The axes of rotation of the second rotating joints can be parallel to the axes formed by the two first bars, allowing a rotating movement about the axis defined by the first bars.

The first one of the second rotating joints of each of the articulated kinematic chains can be joined to the mobile platform by means of an articulated bar and through a fourth rotating joint, the axes of rotation of each of the fourth rotating joints being parallel to one another. The articulated bar is thus joined at one end to the mobile platform (through the fourth rotating joint) and at the other end to the articulated kinematic chain (through the first one of the second rotating joints).

The axes of rotation of the fourth rotating joints can be perpendicular to the plane of the mobile platform. It is contemplated as a possibility that the second one of the second rotating joints of each articulated kinematic chain of the parallel robot is joined to the fixed member by means of a linear actuator or prismatic joint.

Said fixed member can be formed by four fixed bars in which the aforementioned prismatic joints slide. Each articulated kinematic chain will be assembled, by means of the second one of the second rotating joints, to the corresponding prismatic joint, according to an axis parallel to the extension of one of the first bars. The position of said fixed bars can be horizontal, vertical or inclined with respect to a horizontal or vertical plane.

As opposed to the configuration in which the fixed member is formed by bars and the joining thereof to the kinematic chains is through a prismatic joint which simultaneously allows the rotation of said bars with respect to the kinematic chains in the second ones of the second rotating joints, the possibility that the articulated kinematic chains are joined to the fixed member by means of articulated bars which are joined at a first end to the second one of the second rotating joints of each articulated kinematic chain and at a second end to third motor-driven rotating joints which are fixed to the fixed member is additionally contemplated.

The position of each third rotating joint can be such that its axis of rotation is parallel to the axis of rotation of the second rotating joints.

Alternatively, the axes of rotation of the third rotating joints can be parallel to the axes of rotation of the fourth rotating joints.

The third rotating joints can be operated by rotary motors.

The four articulated kinematic chains of the parallel robot can be identical or the parallel robot can comprise a combination of the described kinematic chains.

### Description of the Drawings

To complement the description being made and for the purpose of aiding to better understand the features of the invention, a set of drawings is attached as an integral part of said description in which the following has been depicted with an illustrative and non-limiting character:
Figure 1 shows a perspective view of the mechanism object of the invention according to a first embodiment.
Figure 2 shows a perspective view of the mechanism object of the invention according to a second embodiment.
Figure 3 shows a perspective view of the mechanism object of the invention according to a third embodiment.
Figure 4 shows a perspective view of the mechanism object of the invention according to a fourth embodiment.
Figure 5 shows a perspective view of the mechanism object of the invention according to a fifth embodiment.
Figure 6 shows a perspective view of the mechanism object of the invention according to a sixth embodiment.
Figure 7 shows a perspective view of the mechanism object of the invention according to a seventh embodiment.
Figure 8 shows a perspective view of the mechanism object of the invention according to an eighth embodiment.

### Preferred Embodiment of the Invention

The object of the parallel robot proposed in the present invention is to move a mobile platform (3) carrying a tool (4) for handling objects or pick and place tasks, with four degrees of freedom, three translational movements and one rotational movement about a vertical direction.

Said robot will be formed by a mobile platform (3), which platform is capable of being shifted with the aforementioned four degrees of freedom, perfectly suitable for carrying the tools (4) and/or objects which are considered appropriate, which will be joined to a fixed member (5) by means of four articulated kinematic chains (1) with an identical morphology, which articulated kinematic chains (1) will be formed by different members joined to one another by lower kinematic joints (rotating or prismatic joints).

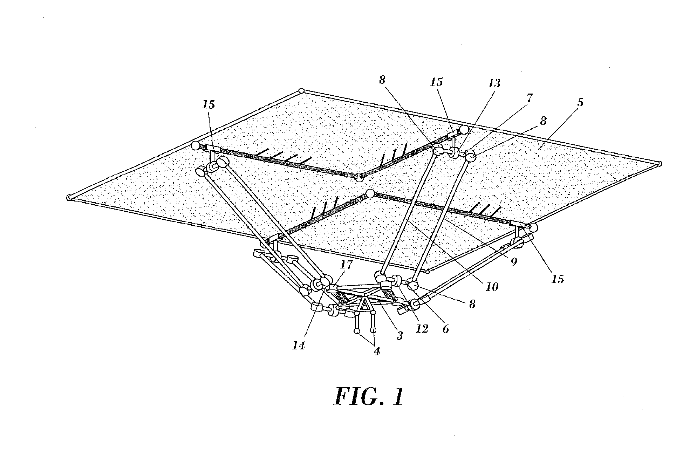

In reference to Figure 1, the mobile platform (3) will be joined to the fixed member (5) by means of four articulated kinematic chains (1) with an identical PRPaRR morphology. Said articulated kinematic chains (1) will consist of a prismatic linear operation or prismatic joint (15) arranged on a fixed base and oriented in the direction shown in Figure 1. Said linear actuator (15) will define the first kinematic joint forming the PRPaRR chain, in this case a prismatic joint (P).

Arranged on said prismatic joint (P) there will be a member provided with a second rotating joint (R) (13) the axis of which is arranged perpendicular to the direction of the linear actuator and parallel to the second one of the first bars (7), as can be seen in Figure 1. Said second rotating joint (13) of the second first bar (7) will serve to join the linear actuator (15) with the articulated parallelogram structure (1).

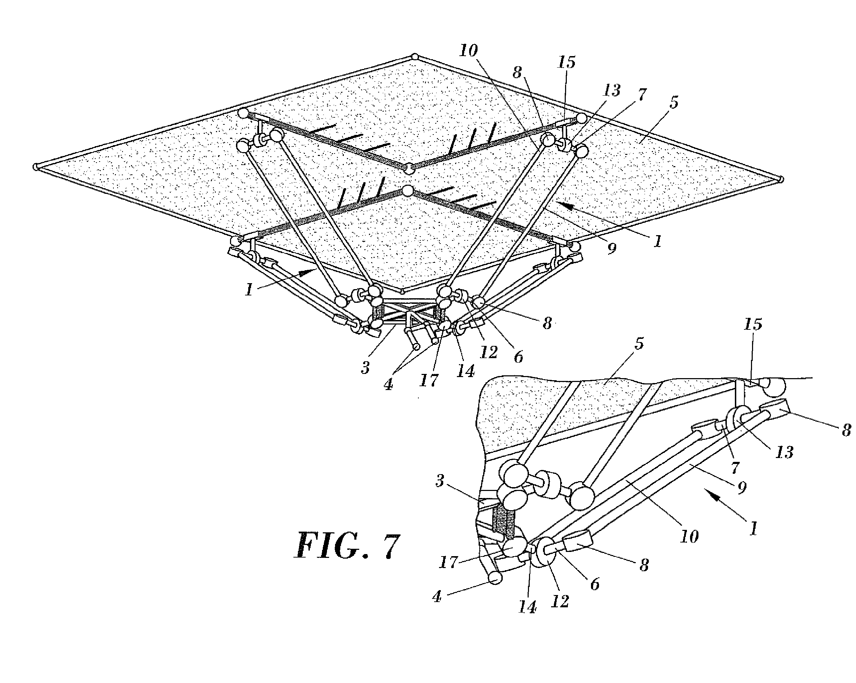

Said articulated parallelogram structure (Pa) (1) is formed by four articulated bars (6, 7, 9, 10) joined to one another by first rotating joints (R) (8), provided with planar movement as a result of the fact that the axes (11) of the four rotating joints (R) (8) defining it are parallel. The respective length of the first bars (6, 7) will be identical, in the same way that the length of the second bars (9, 10) will also be identical. As can be seen in Figure 1, the first articulated bars (6, 7) are joined to the different members of the kinematic chain by means of second rotating joints (R) (12, 13), the prismatic joints (15) and an articulated bar (14). The axes of both second rotating joints (R) (12, 13) are defined strictly parallel to one another. In the embodiment shown in the mentioned Figure 1, the axes of the second rotating joints (12, 13) are perpendicular to each and every one of the axes (11) of the first rotating joints (R) (8) defining the articulated parallelogram structure. Figure 7 shows an embodiment in which the axes of the second rotating joints (12, 13) are parallel to one another but they are not perpendicular to the axes (11) of the first rotating joints (8).

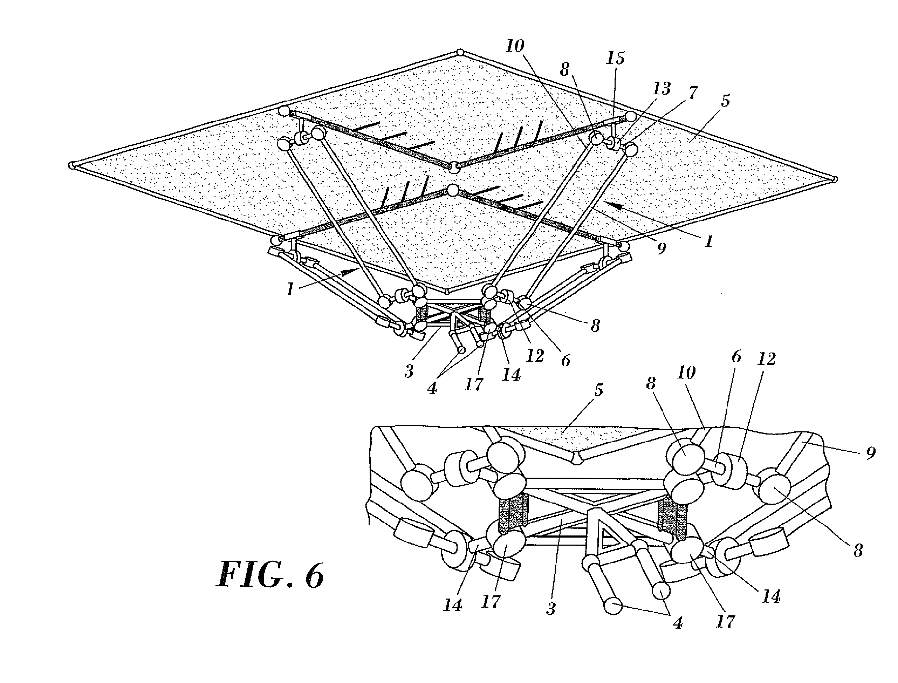

The mobile platform (3) on which the object and/or tool (4) to be shifted will be placed is joined to the articulated parallelogram structure by the first one of the first bars (12). It is joined by means of an articulated bar (14), which is joined to the mobile platform (3) through a fourth rotating joint (R) (17), with its axis of rotation perpendicular to the plane of the mobile platform (3). Figures 6 and 7 show an embodiment in which the axes of rotation of the fourth rotating joints (17) are parallel to one another, but in this case their axes are not perpendicular to the plane of the mobile platform (3).

The structure of the robot is completed once the four articulated kinematic chains (3) forming it are assembled.

By analyzing the mobility of the parallel robot it is possible to determine how each of the four articulated kinematic chains (3) forming it restricts the mobile platform (3) by one degree of freedom. However, as a result of the particular morphology of the articulated kinematic chains (3) used and the orientation of the different joints forming it, the mobility of the mobile platform (3) once the manipulator has been assembled is of four degrees of freedom, three degrees of freedom in translational movement and one of rotational movement.

By performing a conventional kinematic analysis of the parallel robot shown in Figure 1, the correct placement of the actuators can be defined for the purpose of eliminating the occurrence of singularities preventing their controllability but maintaining their symmetry. This placement will consist of positioning the four actuators on one and the same plane in two orthogonal directions as is shown in Figure 1, avoiding collinearity of the actuators arranged in the same direction. Performing analogous analyses will also allow determining the suitable placement of the actuators for each and every one of the embodiments proposed below.

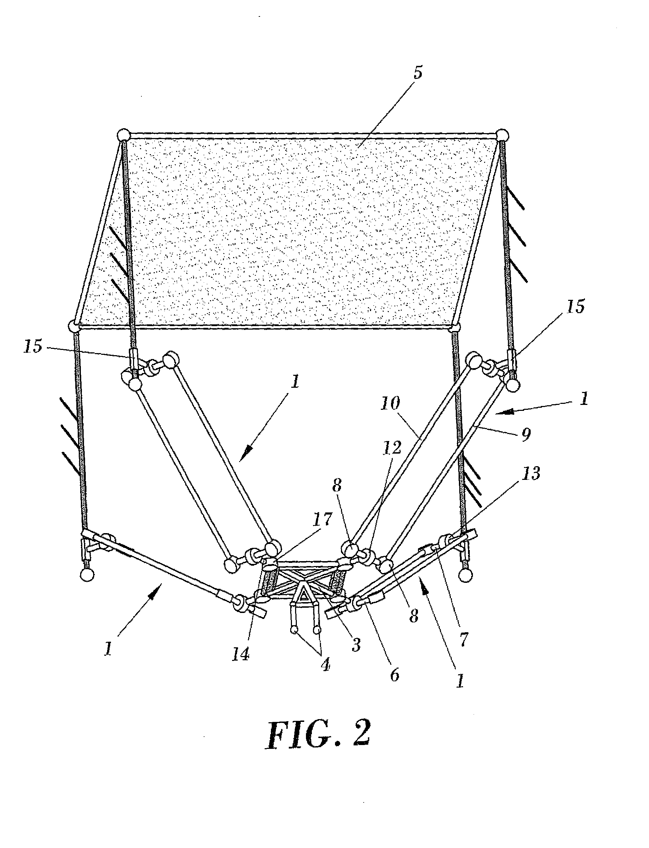

In reference to Figure 2, the mobile platform (3) will be joined to the fixed member (5) by means of four articulated kinematic chains (1) with an identical PRPaRR morphology. Said articulated kinematic chains (1) will consist of a prismatic linear operation or linear actuator (15) arranged in a vertical direction as shown in Figure 2, which linear actuator (15) will define the first kinematic joint forming the PRPaRR chain, in this case a prismatic joint (P). Arranged on said prismatic joint (15) there will be a member provided with a second rotating joint (R) (13) the axis of which is arranged perpendicular to the direction of the linear actuator and parallel to the lower member of the articulated parallelogram structure (Pa) or second one of the first bars (7), as can be seen in Figure 2. The rest of the assembly of the parallel robot is identical to that discussed in describing Figure 1.

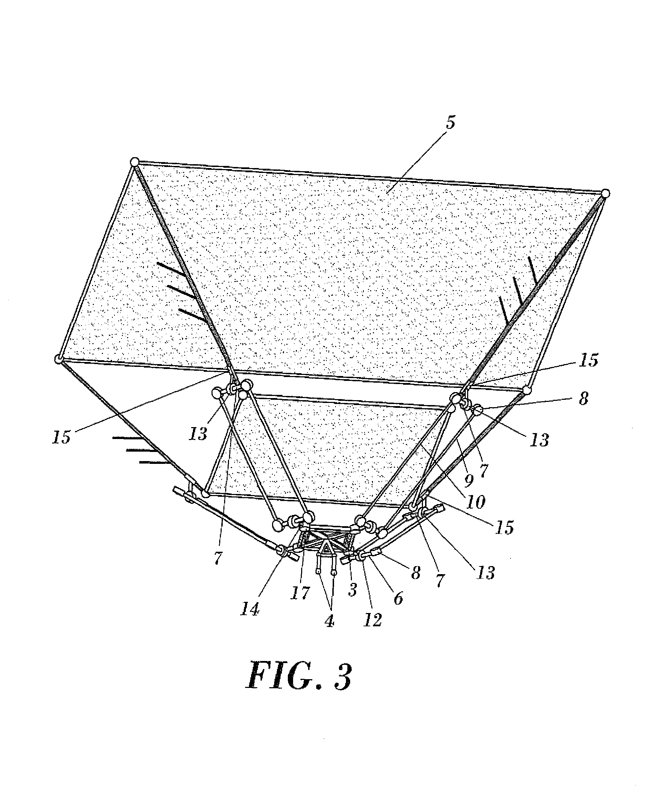

In reference to Figure 3, the mobile platform (3) will be joined to the fixed member (5) by means of four articulated kinematic chains (1) with an identical PRPaRR morphology. Said articulated kinematic chains (1) will consist of a prismatic linear operation or linear actuator (15) arranged in an inclined direction as shown in Figure 3, which linear actuator (15) will define the first kinematic joint forming the PRPaRR chain, in this case a prismatic joint (P). Arranged on said prismatic joint (P) there will be a member provided with a second rotating joint (R) (13) the axis of which is arranged perpendicular to the direction of the linear actuator and parallel to the lower member of the articulated parallelogram structure (Pa) or second one of the first bars (7), as can be seen in Figure 3. The rest of the assembly of the parallel robot is identical to that discussed in describing Figure 1.

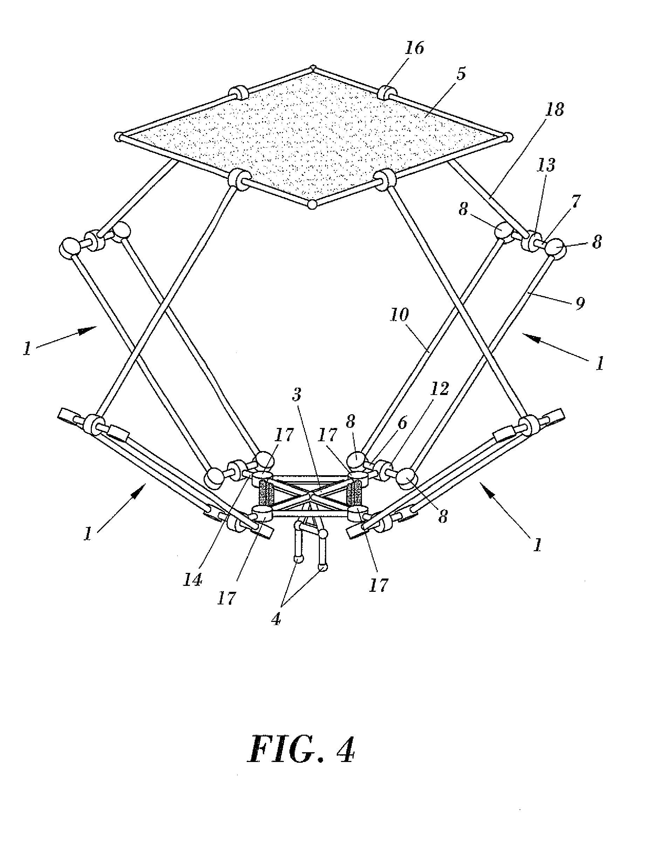

In reference to Figure 4, the mobile platform (3) will be joined to the fixed member (5) by means of four articulated kinematic chains (1) with an identical RRPaRR morphology. Said articulated kinematic chains (1) will consist of third rotating joints (16) operated by a rotary motor, the axis of which is oriented in a direction parallel to the axes of rotation of the second rotating joints (12, 13), as shown in Figure 4, which third rotating joint (16) will define the first kinematic joint forming the RRPaRR chain, in this case a rotating joint (R). Joined to said rotating joint (R) (16) there will be an articulated bar (18) provided with a rotating joint (R) (13) or second rotating joint of the second first bar, parallel to the third rotating joint (R) (16), the axis of which is arranged parallel to the second first bar (7) of the articulated parallelogram structure (Pa), as can be seen in Figure 4. Said second rotating joint (13) will serve to join the mobile member (18) with the articulated parallelogram structure. The rest of the assembly of the parallel robot is identical to that discussed in describing Figure 1.

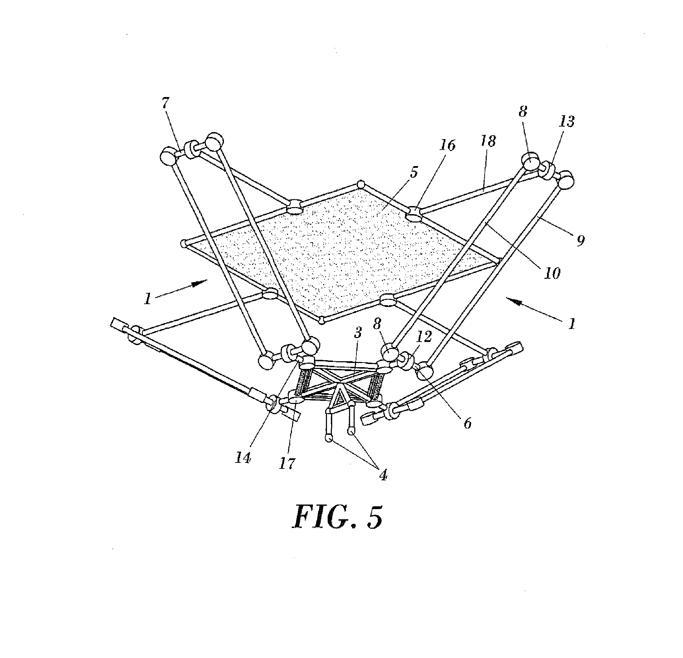

In reference to Figure 5, the mobile platform (3) will be joined to the fixed member (5) by means of four articulated kinematic chains (1) with an identical RRPaRR morphology. Said articulated kinematic chains (1) will consist of third rotating joints (16) operated by a rotary motor, the axis of which is parallel to the axes of rotation of the fourth rotating joints (17), as shown in Figure 5, which third rotating joint will define the first kinematic joint forming the RRPaRR chain, in this case a rotating joint (R). The rest of the assembly of the parallel robot is identical to that discussed in describing Figure 1.

Figure 6 shows an embodiment in which the axes of rotation of the fourth rotating joints (17) are parallel to one another but are arranged oblique (not perpendicular) to the plane of the mobile platform (3). The rest of the components of the robot are similar to those shown in Figure 1.

Figure 7 shows an embodiment in which the axes of the second rotating joints (12, 13) are parallel to one another but are arranged in an oblique (not parallel) direction with respect to the axes formed by the first bars (6, 7). The rest of the components of the robot are similar to those shown in Figure 1.

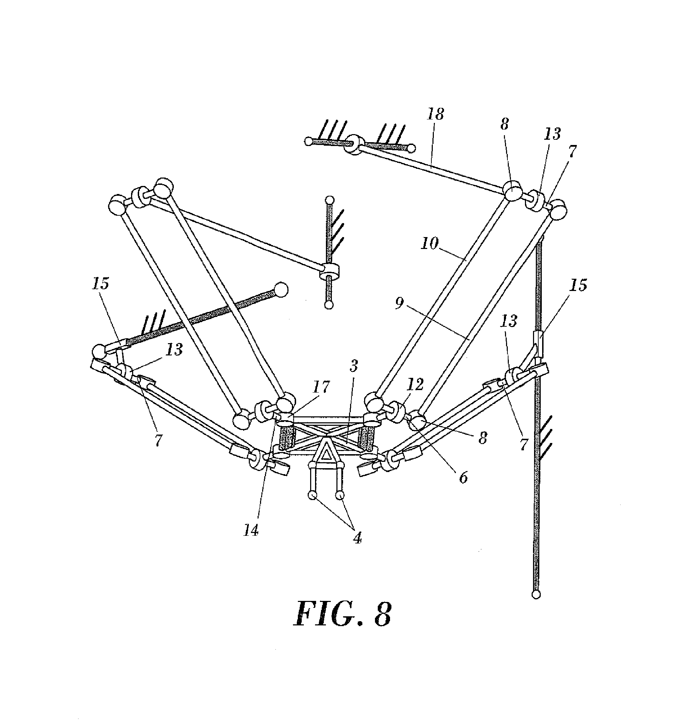

Figure 8 shows a robot with a non-symmetrical configuration with two RRPaRR kinematic chains similar to one of the kinematic chains shown in Figure 4 for example and two PRPaRR kinematic chains similar to one of the kinematic chains shown in Figure 1 for example.

## Claims

1. Parallel robot with four degrees of freedom comprising four articulated kinematic chains (1), each of said articulated kinematic chains (1) being joined at a first end to a mobile platform (3) configured to carry a tool (4) and at a second end to a fixed member (5)
**characterized in that**
said mobile platform (3) is formed by a rigid member.

2. Parallel robot with four degrees of freedom according to claim 1, **characterized in that** each articulated kinematic chain (1) comprises two first parallel bars (6, 7) joined at their ends by means of respective first rotating joints (8) to two parallel second bars (9, 10), said first bars (6, 7) and second bars (9, 10) forming an articulated parallelogram such that the first bars and second bars are all in one and the same plane, the axes of rotation (11) of said first rotating joints (8) being parallel and perpendicular to the plane formed by the first bars (6, 7) and second bars (9, 10).

3. Parallel robot with four degrees of freedom according to claim 2, **characterized in that** the two first bars (6, 7) each comprise in a middle area of said first bars second rotating joints (12, 13) with their axes of rotation parallel to one another, a first one of the second rotating joints (12) being configured to be joined to the mobile platform (3) and a second one of the second rotating joints (13) being configured to be joined to the fixed member (5).

4. Parallel robot with four degrees of freedom according to claim 3, wherein the axes of rotation of the second rotating joints (12, 13) are parallel to the axes formed by the first bars (6, 7).

5. Parallel robot with four degrees of freedom according to claims 2 and 3, **characterized in that** the first one of the second rotating joints (12) of each of the articulated kinematic chains (1) is joined to the mobile platform (3) by means of an articulated bar (14) through a fourth rotating joint (17), the axes of rotation of each of the fourth rotating joints (17) being parallel to one another.

6. Parallel robot with four degrees of freedom according to claim 5, wherein the axes of rotation of the fourth rotating joints (17) are perpendicular to the plane of the mobile platform (3).

7. Parallel robot with four degrees of freedom according to any one of claims 2-6, **characterized in that** the second one of the second rotating joints (13) of each articulated kinematic chain (1) is joined to the fixed member (5) by means of prismatic joints (15).

8. Parallel robot with four degrees of freedom according to claim 7, **characterized in that** the fixed member (5) comprises four fixed bars on which the prismatic joints (15) for each of the articulated kinematic chains (1) are slidably assembled, each articulated kinematic chain (1) being assembled, by means of the second one of the second rotating joints (13), to the corresponding prismatic joint (15), according to an axis parallel to the extension of one of the first bars (6, 7).

9. Parallel robot with four degrees of freedom according to any one of claims 7-8, **characterized in that** the four fixed bars are horizontal.

10. Parallel robot with four degrees of freedom according to any one of claims 7-8, **characterized in that** the four fixed bars are vertical.

11. Parallel robot with four degrees of freedom according to any one of claims 7-8, **characterized in that** the four fixed bars are inclined with respect to a horizontal plane and a vertical plane.

12. Parallel robot with four degrees of freedom according to any one of claims 2-6, **characterized in that** the articulated kinematic chains (1) are joined to the fixed member (5) by means of articulated bars (18) which are joined at a first end to the second one of the second rotating joints (13) of each articulated kinematic chain (1) and at a second end to third motor-driven rotating joints (16), said third motor-driven rotating joints (16) fixed to the fixed member (5).

13. Parallel robot with four degrees of freedom according to claim 12, **characterized in that** the axes of rotation of the third motor-driven rotating joints (16) of each articulated kinematic chain (1) are parallel to the axes of rotation of the second rotating joints (12, 13).

14. Parallel robot with four degrees of freedom according to claim 12, **characterized in that** the axes of rotation of the third rotating joints (16) are parallel to the axes of rotation of the fourth rotating joints (17).

15. Parallel robot with four degrees of freedom according to any of claims 1-14, **characterized in that** the four articulated kinematic chains (1) are identical.

16. Parallel robot with four degrees of freedom according to any of claims 1-15, **characterized in that** the mobile platform (3) carries a tool (4).
